# EUROPEAN PATENT APPLICATION

(11) **EP 0 642 872 A1**
(43) Date of publication of application: **15.03.1995**
(21) Application number: 93910411.3
(22) Date of filing: 28.05.1993
(51) Int. Cl.: B23K 9/23

(54) **WELDING STAINLESS MATERIAL, PROCESS APPARATUS, ULTRA-PURE WATER FEEDING APPARATUS, ULTRAHIGH-PURE GAS FEEDING PIPING SYSTEM, AND WELDING METHOD**

(30) Priority: 29.05.1992 JP 164375/92; 21.10.1992 JP 282711/92; 13.11.1992 JP 303681/92
(71) Applicant: OSAKA SANSO KOGYO LIMITED, Yodogawa-ku, Osaka-shi, Osaka-fu 532 (JP); OHMI, Tadahiro, Sendai-shi Miyagi-ken 980 (JP)
(72) Inventor: OHMI, Tadahiro, Sendai-shi, Miyagi-ken 980 (JP); NAKAMURA, Masakazu, Higashimatsuyama-shi, Saitama-ken 355 (JP)
(74) Representative: Weitzel, Wolfgang, Dr.-Ing. Patentanwalt
(86) International application number: JP9300719
(87) International publication number: WO9324268

(57) **Abstract**

This invention aims at providing a welding method capable of preventing generation and re-deposition of metallic fumes a: portions near the surface of a weld portion and capable of reducing a deposition quantity of chromium carbides. The present invention further aims at providing a welding stainless material free from deposition of fumes, a semiconductor fabrication apparatus, an ultra-pure water feeding apparatus and an ultrahigh-pure gas feeding piping system. In a method of connecting a plurality of stainless members by fusing and solidifying predetermined portions (weld portions) of these stainless materials, the welding method of this invention is characterized in that heat input quantity to the weld portions is set below 600 joule/cm. Furthermore, the welding method is characterized in that the welding rate is set to below 20 cm/min. The stainless material is characterized in that when the welded body is washed with ultra-pure water (at flow rate of 15 l/hr for 6 hours) after welding, the sum of elution quantities of Fe, Ni, Cr and Mn is not greater than 0.1 µg per cm of the weld length.

## Description

### Technological Field

The present invention relates to a welding stainless material preventing fumes of metallic atoms from attaching the material after being welded, process apparatus, ultra-pure water feeding apparatus, ultrahigh-pure gas feeding system, and welding method.

### Background Art

Tungsten-inert gas welding, arc gas welding, and electron beam welding are widely used for joining metallic members. These existing welding arts hardly take account of the surface roughness of a weld or adhesion of metallic fumes generated at the weld. Therefore, burning, surface crack, or deposition of chromium carbide occurs at the weld and thereby problems occur such that impurities mainly due to metallic powder are produced and the mechanical strength decreases after a long time.

In the case of the existing welding art, metallic atoms and metallic fumes which are lumps of the metallic atoms are evaporated and scattered from a metal melted portion which is a welded portion and they are cooled in the vicinity of the welded portion to be and adhered again. It is found that the adhered metal peels off particularly by applying a corrosive gas to it and resultingly it is found that a process atmosphere is contaminated and deteriorated, and this causes a large problem in a semiconductor fabricating apparatus, gas feeding pipe system, and ultrapure water producing and feeding system which particularly require high-cleanliness of atmosphere.

Moreover, in the case of the existing welding art, a weld bead becomes wide and its surface becomes rough. Furthermore, extreme deposition of chromium carbide occurs, thereby generating intergranular corrosion, etc..

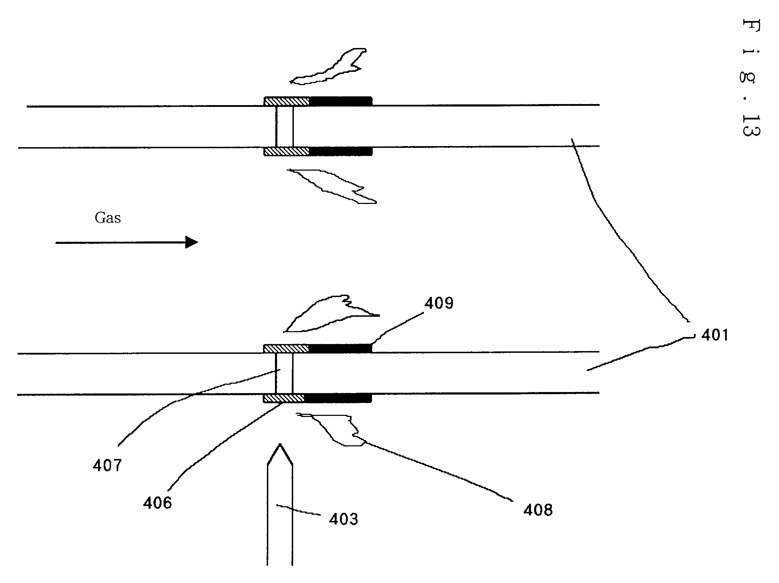

The above adhesion of metallic fumes, surface roughing of a weld, and surface deposition of chromium carbide are more minutely described below by referring to the accompanying drawings. Fig. 13 shows the constitution of tungsten-inert gas welding of a piping material according to the exiting method. In the figure, symbol 403 represents a tungsten electrode and 401 represents a piping material to be welded. Symbol 406 represents a weld and 408 represents metallic fumes produced at the weld. The metallic fumes 408 adhere to the surface of the piping material 401 at the downstream side of the weld 407 due to the flow of an arc gas or back-shielding gas and becomes an adhered metal 409. Moreover, in the case of the existing welding method, atmospheric air mixes with the welding atmosphere to cause the burning 406 on the weld surface because the welding atmosphere is not controlled. The adhered metal 409 does not peel off due to an inert gas but it peels off and contaminates a gaseous atmosphere when applying a corrosive gas such as hydrogen chloride gas to the metal. Metals which peel off include Fe, Ni, Cr, and Mn mainly contained in a metallic material and these metals are detected in a gaseous atmosphere. These impurities cause a serious problem in semiconductor fabrication because they extremely deteriorate the characteristics of an LSI.

Therefore, a semiconductor fabricating apparatus, an ultrapure water producing and feeding apparatus, and a ultrahigh-pure gas feeding pipe system on which no fumes attach are strongly requested at present. Also, a welding method causing no fume attachment is desired.

To solve the above problems, an object of the present invention is to provide a welding method making it possible to prevent metallic fumes from occurring in the vicinity of or reattaching to the vicinity of a weld surface and decrease deposited amount of chromium carbide. Another object of the present invention is to provide a weld stainless material on which no fumes adhere, and moreover a semiconductor fabricating apparatus, an ultra-pure water producing and feeding apparatus, and a ultrahigh-pure gas feeding pipe system on which no fumes adhere.

### Disclosure of the Invention

The welding method of the present invention is a welding method for connecting a plurality of stainless steel members by melting and solidifying a predetermined portion (a weld) of each of the stainless steel members, characterized in that the quantity of heat incoming to a weld is set to 600 J/min or less. It is desirable to set the welding speed to 20 cm/min or higher.

Moreover, the welding method of the present invention is characterized by performing welding while applying a magnetic field having a component vertical to the surface of a weld.

Furthermore, it is preferable to set the width of a weld bead in a pipe to 1 mm or less.

Furthermore, it is preferable to use a stainless steel material for welding with the Mn content of 0.8 wt% or less in order to reduce Mn which is the main cause of fume generation at the time of welding. In particular, it is more preferable to use a stainless steel member with the Mn percentage content of 0.5 wt% or less.

### Function

The inventors of the present invention completed the present invention as the result of finding out that fumes produced due to welding deteriorates the performance of a semiconductor device and prevents the device performance from being further improved while developing a semiconductor related apparatus and enthusiastically studying the relation between welding conditions and occurrence of fumes.

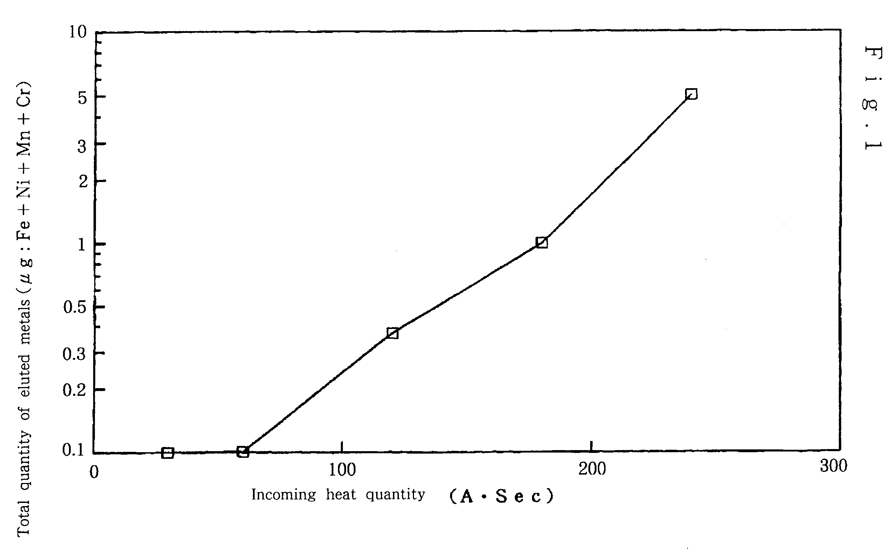

Fig. 1 shows the relation between incoming heat and produced fume quantity for at the time of arc welding. In Fig. 1, the axis of ordinates shows the sum of the eluted quantities of Fe, Ni, Cr, and Mn when flowing ultrapure water at the flow rate of 15 lit/hr for six hours after welding about the unit welding length. As shown in Fig. 1, fumes produced for welding closely relates to the incoming heat quantity and the fume produced quantity is proportional to a logarithmic value of the incoming heat quantity. When setting the incoming heat quantity to 70 A·sec (corresponding to 600 J/cm) or less, occurrence of fumes is not confirmed.

That is to say, in the case of the present invention, the incoming heat quantity is 600 J/cm or less and less fumes are produced as the welding speed increases even for the same incoming heat quantity. A welding speed of 20 cm/min or higher is preferable. By setting the welding speed to 20 cm/min or higher, it is possible to further decrease the fumes to be produced.

Moreover, by generating a magnetic field having a component vertical to the surface of a melted portion with an electromagnet or a permanent magnet, it is possible to keep metallic fumes produced for welding only at the melted portion, further prevent a welded portion from flowing to the downstream side, and prevent metallic fumes from depositing on a weld member. Moreover, because a melted metal has a large electric conductivity, the flatness of the weld is improved due to the magnetic field.

Furthermore, because the magnetic field converges ions or electrons produced by melting means, it is possible to concentrate a beam and thereby decrease the width of a weld bead. At the same time, it is possible to decrease the incoming heat quantity for welding. Thus, deposited quantity of chromium carbide is greatly decreased and intergranular corrosion is extremely decreased.

A preferable magnetic-field intensity for the present invention is 50 gauss or more on the surface of a weld. A magnetic-field intensity of 300 gauss or more is more preferable. When the intensity is 300 gauss or more, the fume-scattering prevention effect is further improved.

As a means for applying a magnetic field a permanent magnet or an electromagnet is used. The permanent magnet normally uses an alnico magnet. To weld a material with a high permeability, however, a samarium-cobalt magnet is used.

As a means for melting a weld, a means using, for example, electric discharge, electron beam, or laser are used. The means using electric discharge includes tungsten-inert gas welding and arc gas welding.

The process apparatus of the present invention includes semiconductor fabricating apparatus, superconducting thin-film forming apparatus, magnetic thin-film forming apparatus, metallic thin-film forming apparatus, and dielectric thin-film forming apparatus. Specifically, they are film forming apparatus and treating apparatus for sputtering, vapor deposition, CVD, PCVD, MOCVD, MBE, dry etching, ion implantation, and diffusion and oxidation furnace and evaluating apparatus for Auger electron spectroscopy, XPS, SIMS, RHEED, and TREX.

By decreasing the existing weld-bead width inside a pipe to 1 mm or less, metallic fumes 1 being adhered to the downstream side of the bead can be decreased and thereby the quantity of Mn can be decreased. Moreover, a current value can be decreased by increasing the welding speed. As a result, the incoming heat quantity is decreased and therefore more effect can be obtained.

Furthermore, by decreasing the Mn quantity contained in weld stainless steel to a value less than the existing value of 0.5 to 0.8%, it is possible to further decrease the Mn quantity being adhered to the downstream side of the bead in welding. Particularly by decreasing the weld-bead width to 1 mm or less, more effect can be obtained.

### Brief Description of the Drawings

Fig. 1 is a graph showing the relation between incoming heat quantity and produced fume quantity.
Fig. 2 is a graph showing the eluted metal quantity when rinsing fumes with ultrapure water.
Fig. 3 is a schematic view showing the welding method of the embodiment 2.
Figs. 4(a) and 4(b) are external views of stainless steel materials showing streaks produced in high-speed welding.
Fig. 5 is a graph showing the relation between surface roughness of a bead and welding speed in the case of butt welding.
Fig. 6 is a graph showing the relation between rotational speed, current value, and incoming heat quantity under the each welding condition.
Fig. 7 is a graph showing the transition of Mn percentage content on the outermost layer in the vicinity of a bead under various welding conditions;
Fig. 8 is a graph showing the transition of metallic fume removing effect by ultrapure water rinsing under various welding conditions;
Fig. 9 is a graph showing the relation between welding speed and produced metallic-fume quantity;
Fig. 10 is a graph showing the influence of bead width on the attached Mn quantity.
Fig. 11 is a graph showing the influences of bead width and welding speed on the attached Mn quantity.
Fig. 12 is a graph showing the influence of the Mn percentage content in base stainless steel on the attached Mn quantity.
Fig. 13 is a conceptual view showing an existing welding method.

### (Description of symbols)

- 301, 301':: Welded stainless-steel pipe
- 302, 302':: Coil
- 303:: Electrode
- 304:: Insulator
- 406:: Burning
- 407:: Weld
- 408:: Fumes
- 409:: Adhered metal

### Best Mode for Carrying Out the Present Invention

The present invention is described below in detail by referring to embodiments.

### (Embodiment 1 and comparative example 1)

A pipe with a length of 4 m is manufactured by welding 10 SUS316L pipes with diameter of 1/4 inch (diameter of 6.35 mm) and 40 cm long by the tungsten-inert gas welding method under the welding conditions of the present invention and those of the prior art shown in Table 1 respectively, while flowing Ar and 5% H₂ through the pipes.

**Table 1**

| | Embodiment 1 | Comparative example 1 |
|---|---|---|
| Voltage E (V) | 12 | 12 |
| Current I (A) | 23 | 13 |
| Welding speed V (cm/min) | 30 | 15 |
| Incoming heat quantity H* (J/cm) | 552 | 624 |

| | | |
|---|---|---|
| *: H=60IE/v | | |

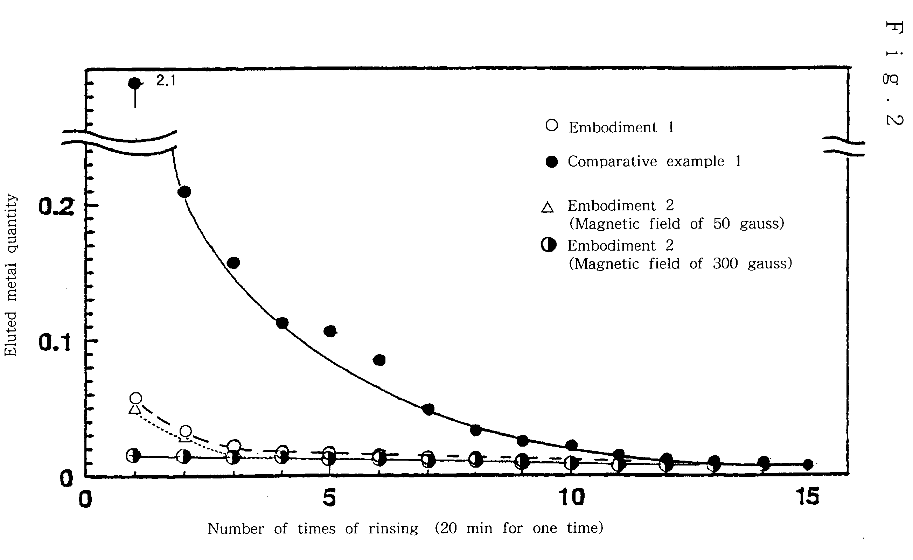

Thereafter, the concentrations of metals eluted from the welded pipes are measured with time by flowing ultrapure water (UPW) through the pipes at the flow rate of 10 liter/hr. Fig. 2 shows the measurement results. It is preferable to use ultrapure water with an electrical resistance of 18.25 MΩ or more.

As shown in Fig. 2, the adhered fume quantity in the pipe welded by the welding method of this embodiment can almost be ignored compared with that of the comparative example and it is found that the stainless-steel pipe manufactured for this embodiment can be applied to a high-cleanliness apparatus
Also, by injecting HCl gas containing water of 1.4 ppm into the pipes after being welded at the pressure of 2.5 kg/cm² and leaving them as they are for 12 hr and thereafter cutting the pipes to observe the internal surfaces of them, although intergranular corrosion is observed on the welds of the comparative example 1 no corrosion was confirmed on the welds of the embodiment 1.

### (Embodiment 2)

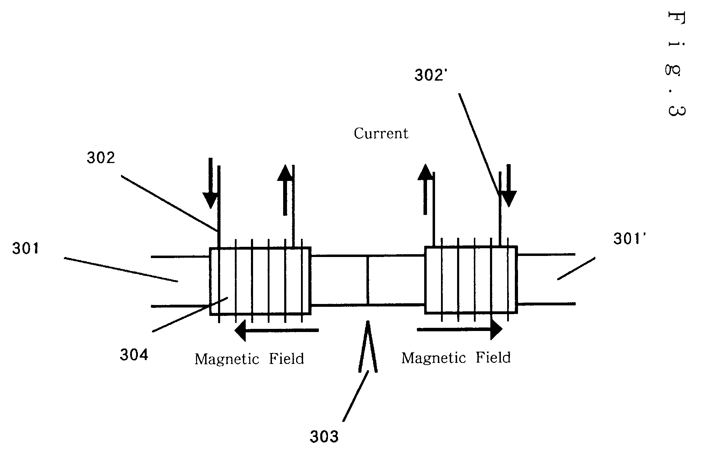

As shown in Fig. 3, a welded pipe with a length of 4 m is manufactured by winding coils 302 and 302' on pipes, generating a magnetic field vertical to the surface of the pipes at a weld and welding the pipes under the same welding conditions of the embodiment 1.

An eluted metal quantity is obtained in the same manner as the case of the embodiment 1. Fig. 2 shows the transition of the eluted metal quantity under various intensities of magnetic field. From Fig. 2, it is found that produced fumes are further decreased by welding the pipes at a low incoming heat quantity while applying a magnetic field. In particular, no metal elution is found at 300 gauss or more.

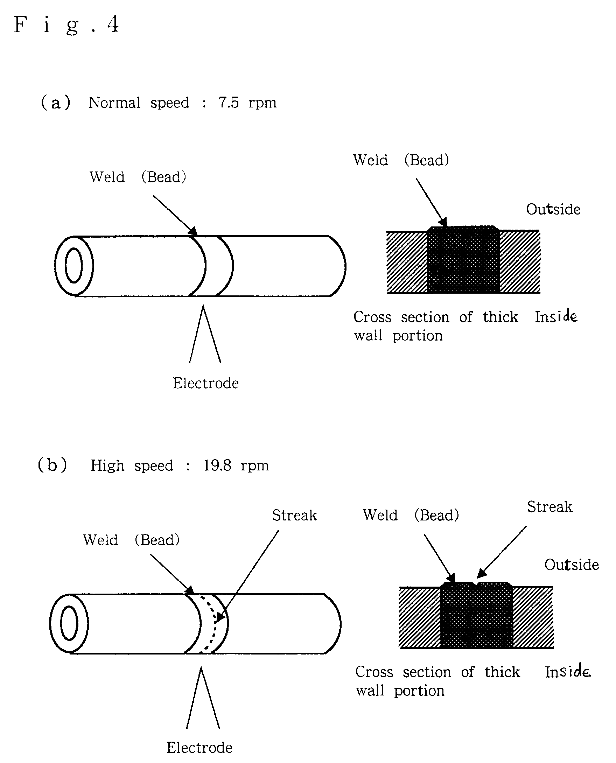

Moreover, by injecting HCl gas into the welded pipe in the same manner as the case of the embodiment 1 and leaving it as it is for 12 hr and then observing the surface of the pipe without cutting the pipe, no intergranular corrosion is observed and moreover it is found that a weld bead gets further narrowed and flat. In the case of the high-speed welding (rotational speed of 19.8 rpm) shown in the embodiments of the present invention, a streak with a depth of 0.1 mm can be observed outside the stainless-steel pipe by the naked eye as shown in Fig. 4. For the rotational speed of 7.5 rpm, however, the streak is not observed.

### (Embodiment 3)

SUS316L pipes with diameter of 1/4 inch (6.35 mm) and length of 40 cm provided with EP (electrolytic polishing) are joined by means of automatic two-turn butt welding at 5 rpm and automatic one-turn butt welding at 7.5 to 60 rpm under the same condition as those of the embodiment 1.

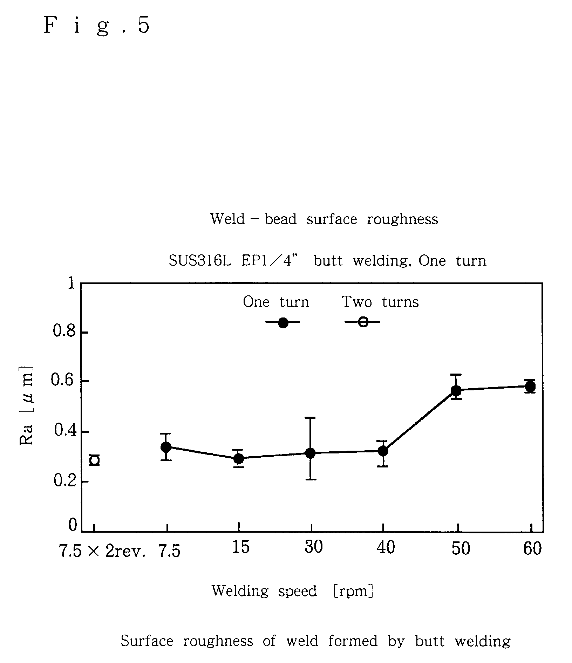

Fig. 5 shows the relation between surface roughness of a bead produced by butt welding and welding speed.

The behavior shown in Fig. 5 is observed on the inner-surface roughness of a weld. In Fig. 5, the surface roughness is shown as the center-line average roughness (Ra).

It is found that the weld surface has a surface roughness Ra of approx. 0.3 µm at the welding speed of 30 rpm or less but Ra increases as the welding speed increases when the welding speed is 40 rpm or higher.

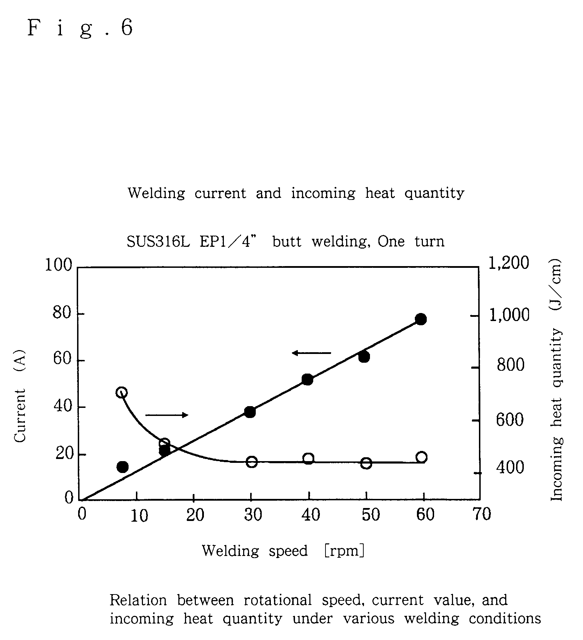

Fig. 6 shows the relation between rotational speed, current value, and incoming heat quantity under each welding condition.

In Fig. 6, symbol "○" represents the incoming heat quantity for automatic butt welding. From Fig. 6, it is found that the incoming heat quantity converges to an approximately constant value at a rotation higher than 30 rpm.

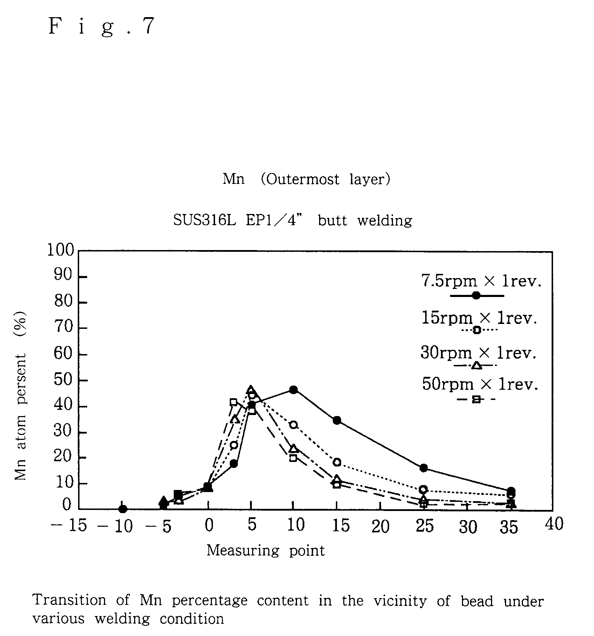

Fig. 7 shows the transition of Mn percentage content on the outermost layer in the vicinity of a bead under various welding conditions. This is the result of evaluating the Mn quantity adhered to the inner surface of a pipe in the range between 15 mm toward the upstream side and 35 mm toward the downstream side for the direction of the back-shielding gas flow around a weld.

From the result of two-turn welding at 7.5 rpm, it is found that the adhered Mn quantity is maximized and it decreases as the welding speed increases.

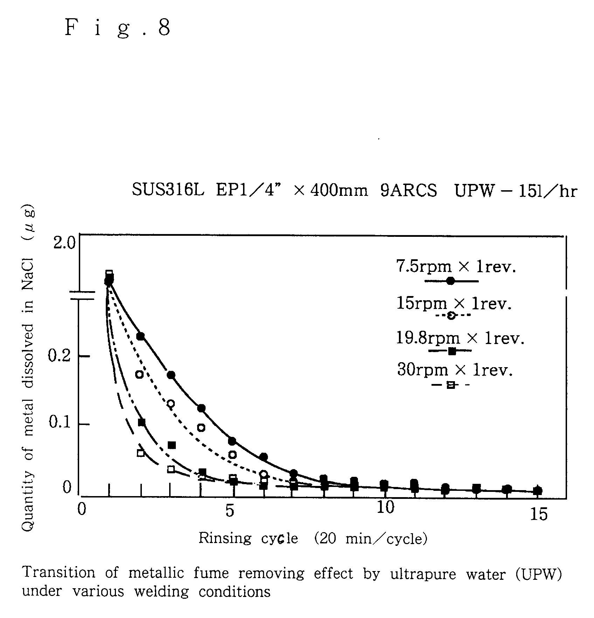

Fig. 8 shows the transition of the metallic fume removing effect by ultrapure water rinsing under various welding conditions.

This is the result of confirming the rinsing effect in relation to the welding speed when rinsing metallic fumes adhered to the vicinity of a weld with ultrapure water of 18.25 MΩ or more.

Because the adhered metallic-fume quantity decreases as the welding speed increases, the decrease rate of metallic fumes is increased every time rinsing is repeated.

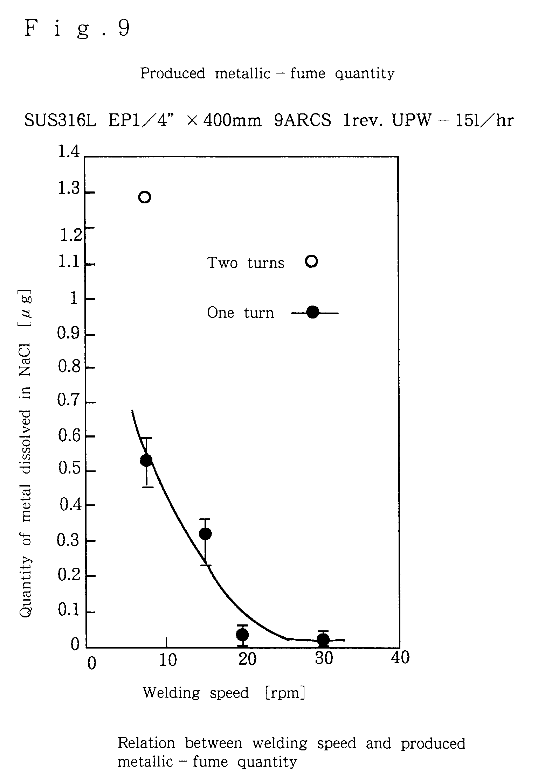

The total quantity of metallic fumes adhered to the vicinity of welds is obtained from the results in Fig. 8. The results in Fig. 8 are shown in Fig. 9 as the relation between welding speed and produced metallic-fume quantity.

At a welding speed of approx. 30 rpm, the adhered metallic-fume quantity becomes constant, which approximates the heat quantity incoming to the weld shown in Fig. 6.

After all, it is found that the welding condition at approx. 30 rpm is the best in view of the roughness of weld inner surface, heat quantity incoming to a weld, and produced metallic-fume quantity.

The results same as the above are obtained on a pipe with a diameter of 1/2 inch (12.7 mm).

### (Embodiment 4)

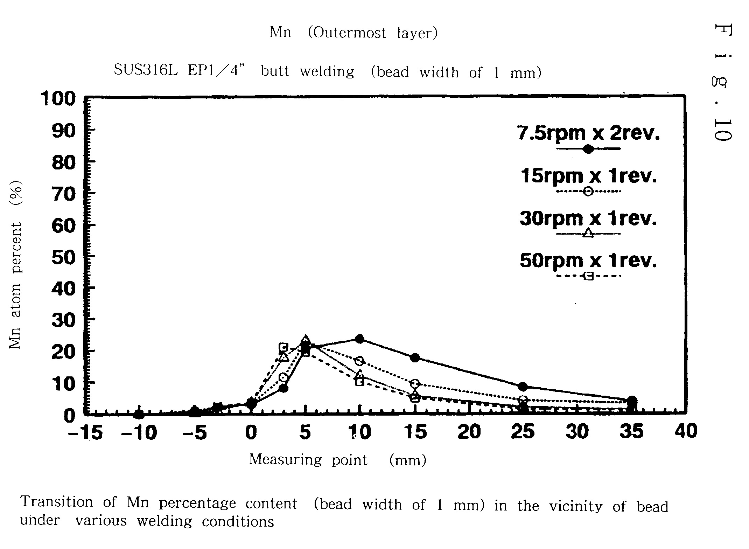

Fig. 10 shows the transition of Mn percentage content on the outermost layer in the vicinity of a bead with the weld bead width of 1 mm under various welding conditions. This is the result of evaluating the Mn quantity adhered on the inner surface of a pipe in the range between 15 mm toward the upstream side and 35 mm toward the downstream side in the flowing direction of a back-shielding gas.

From the result, it is found that the adhered Mn quantity decreases compared with the adhered Mn quantity for the welding-bead width of 2 mm shown in Fig. 7 by decreasing the bead width to 1 mm.

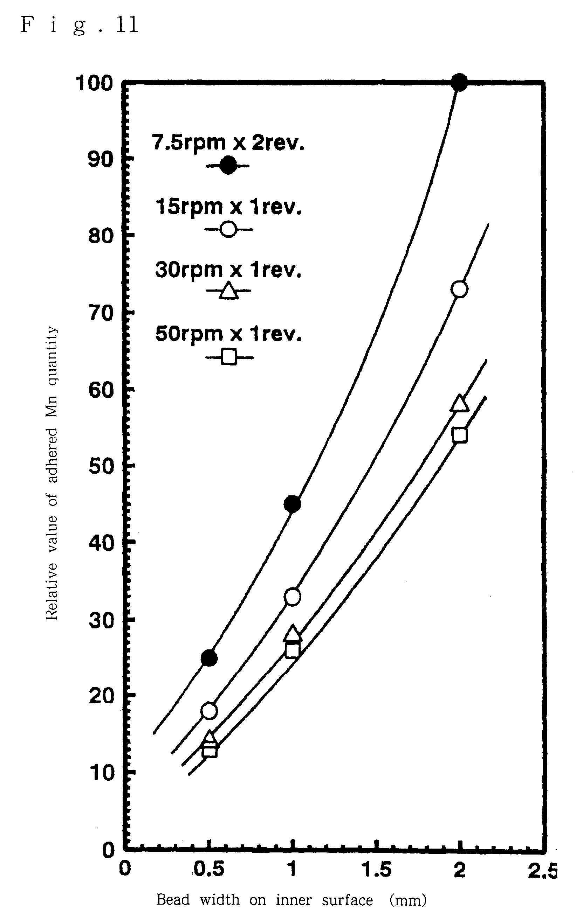

Fig. 11 shows the relation between total quantity of Mn adhered in the range of 35 mm toward the downstream side from a weld bead and weld-bead width under various welding speeds. In Fig. 11, the total quantity of Mn for 7.5-rpm. 2-round welding is assumed as 100.

From this figure, it is found that the total quantity of Mn decreases as the welding speed increases when the weld-bead width is constant and the total quantity of Mn decreases as the bead width decreases when the welding speed is constant.

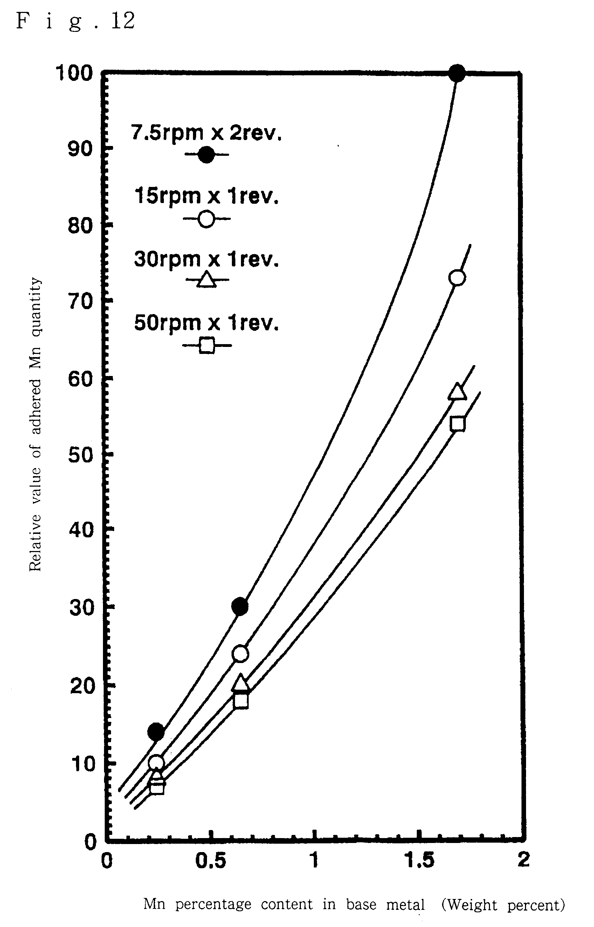

Fig. 12 shows the result of measuring the Mn quantity on the outermost layer adhered to the downstream side of a bead under various welding speeds by using three types of weld stainless-steel materials with different Mn percentage contents. In this case, stainless steel materials with Mn percentage contents of 0.24, 0.65, and 1.7% are used. Moreover, the weld-bead width is set to 1 mm and the total quantities of Mn adhered to the range of 35 mm toward the downstream side from a beam are relatively compared. The total quantity of Mn for 7.5-rpm 2-round welding is assumed as 100. From the result, it is found that the Mn fume quantity produced at the time of welding decreases as the Mn quantity contained in weld stainless steel decreases and this effect is further improved as the welding speed increases.

### Industrial Applicability

As described above, the present invention makes it possible to decrease the contamination due to metal adhered to the vicinity of the surface of a weld by metallic fumes produced from a melted portion and decrease the deposited quantity of chromium carbide.

Moreover, by providing a magnetic field having a component vertical to the surface of the melted portion, it is possible to further prevent metallic fumes from occurring and re-adhering and prevent a welded body from being contaminated. Furthermore, it is possible to improve the flatness of the surface of a weld and decrease the width of a weld bead.

The welding method of the present invention makes it possible to provide a stainless material, process apparatus, ultrahigh-pure gas feeding pipe system, and ultrapure water producing and feeding apparatus without fumes adhered.

## Claims

1. A stainless material characterized in that the total eluted quantity of Fe, Ni, Cr, and Mn after rinsing a welded body with ultrapure water at the flow rate of 15 lit/hr for six hours is 0.1 µg or less per weld length of 1 cm.

2. A process apparatus characterized in that the apparatus is constituted with a stainless materials where the total eluted quantity of Fe, Ni, Cr, and Mn after rinsing a welded body without further treatment, with ultrapure water at the flow rate of 15 liter/hr for six hours is 0.1 µg or less per weld length of 1 cm.

3. An ultrapure water producing and feeding apparatus characterized in that the apparatus is constituted with a stainless material where the total eluted quantity of Fe, Ni, Cr, and Mn after rinsing a welded body without further treatment, with ultrapure water at the flow rate of 15 liter/hr for six hours is 0.1 µg or less per weld length of 1 cm.

4. A ultrahigh-pure gas feeding apparatus characterized in that the apparatus is constituted with a stainless material where the total eluted quantity of Fe, Ni, Cr, and Mn after rinsing a welded body without further treatment, with ultrapure water at the flow rate of 15 lit/hr for six hours is 0.1 µg or less per weld length of 1 cm.

5. A stainless steel welding method for connecting a plurality of stainless steel members by melting and solidifying a predetermined portion (a weld) of each of the stainless steel materials, characterized in that the heat quantity incoming to the weld is set to 600 J/cm or less.

6. The stainless steel welding method according to claim 5, wherein the welding speed is set to 20 cm/min or higher.

7. The stainless steel welding method according to claim 5 or 6, wherein welding is performed while applying a magnetic field having a component vertical to the surface of the weld.

8. The stainless steel welding method according to claim 7, wherein the intensity of the magnetic field at the weld is 50 gauss or more.

9. The stainless steel welding method according to any one of claims 5 through 8, wherein the weld-bead width in a pipe is set to 1 mm or less.

10. The stainless steel welding method according to any one of claims 5 through 9, wherein a weld stainless material with the Mn percentage content of 0.8 wt% or less is used.
